# EUROPÄISCHE PATENTSCHRIFT

(11) **EP 2 176 911 B1**
(45) Veröffentlichungstag und Bekanntmachung des Hinweises auf die Patenterteilung: **13.07.2011**
(21) Anmeldenummer: 08758809.1
(22) Anmeldetag: 28.05.2008
(51) Int. Cl.: H01M 8/04

(54) **VERFAHREN UND VORRICHTUNG ZUM BETREIBEN EINES BRENNSTOFFZELLENSYSTEMS MIT EINEM IN EINEN BRENNSTOFFKREISLAUF DES BRENNSTOFFZELLENSYSTEMS ANGEORDNETEN REZIRKULATIONSGEBLÄSE**
METHOD AND DEVICE FOR OPERATING A FUEL CELL SYSTEM HAVING A RECIRCULATION BLOWER DISPOSED IN A FUEL CIRCUIT OF THE FUEL CELL SYSTEM
PROCÉDÉ ET DISPOSITIF PERMETTANT DE FAIRE FONCTIONNER UN SYSTÈME DE PILE À COMBUSTIBLE, PRÉSENTANT UNE SOUFFLANTE DE RECIRCULATION DANS UN CIRCUIT DE COMBUSTIBLE DUDIT SYSTÈME DE PILE À COMBUSTIBLE

(30) Priorität: 07.08.2007 DE 102007037096
(43) Veröffentlichungstag der Anmeldung: 21.04.2010
(73) Patentinhaber: Daimler AG, 70327 Stuttgart (DE)
(72) Erfinder: KONRAD, Gerhard, 89081 Ulm (DE); KUNCKEL, Heiner, 72535 Heroldstatt (DE)
(74) Vertreter: JENSEN & SON
(86) Internationale Anmeldenummer: PCT/EP2008/004224
(87) Internationale Veröffentlichungsnummer: WO 2009/018867

(56) Entgegenhaltungen:
- EP-A- 1 603 180
- JP-A- 8 203 547
- JP-A- 2003 031 244

## Beschreibung

Die Erfindung betrifft ein Verfahren und eine Vorrichtung zum Betreiben eines Brennstoffzellensystems mit einem in einen Brennstoffkreislauf des Brennstoffzellensystems angeordneten Rezirkulationsgebläse.

Üblicherweise wird bei der Gasversorgung für ein Brennstoffzellensystem als Oxidationsstoff Frischluft zunächst in einem Verdichter komprimiert und dann in einem Ladeluftkühler abgekühlt. Dabei wird im Bereich geringer elektrischer Leistungsanforderungen ein niedriger Luftmassenstrom bei verhältnismäßig hohem Druck benötigt. Da der Verdichter, insbesondere ein Turboverdichter den erforderlichen Druck nur bei höheren Luftmassenströmen bereitstellen kann, wird in diesem Bereich üblicherweise eine höhere Luftmenge gefördert als benötigt, die als überschüssige Luft nach dem Verdichter über ein Abblasventil abgeblasen wird. Im Weiteren strömt die Luft in ein Befeuchtermodul, in welchem sie Wasserdampf aus einem kathodenseitig ausströmenden Kathodenabgas der Brennstoffzelle oder eines Brennstoffzellenstapels aufnimmt. Danach wird die befeuchtete Frischluft in die Brennstoffzelle oder den Brennstoffzellenstapel geleitet und nimmt dort an der elektrochemischen Reaktion teil. Das kathodenseitig ausströmende Kathodenabgas wird dann dem Befeuchtermodul zugeführt, wo es Wasserdampf an die der Kathode zuführende Luft abgibt und einer Turbine zugeführt wird.

Der Anode des Brennstoffzellensystems wird beispielsweise über ein Dosierventil überstöchiometrischer Wasserstoff als Brennstoff zugeführt. Nicht umgesetzter Wasserstoff und an der Kathode übergetretener Stickstoff und Wasserdampf werden mittels eines Gebläses (im Weiteren Rezirkulationsgebläse) wieder auf das Druckniveau des Frischgases verdichtet und erneut in den wasserstoffzustrom eingespeist.

Üblicherweise wird das Rezirkulationsgebläse zur Rückführung des Wasserstoffes elektromotorisch angetrieben. Dies erfordert eine aufwändige Leistungselektronik und einen zusätzlichen Elektromotor.

Aus der JP 2003031244 A ist ein luftbetriebenes Rezirkulationsgebläse bekannt. Dabei wird das Rezirkulationsgebläse von einer Turbine angetrieben, die mit kathodenseitig ausströmenden Kathodenabgas, insbesondere Luft beaufschlagt wird. Nachteilig hierbei ist, dass bedingt durch die Abzweigung von Kathodenabgas zur Beaufschlagung der Turbine, die das Rezirkulationsgebläse antreibt, die Brennstoffrückführung nicht in allen Lastbereichen optimal erfolgen kann.

JP 08 203547 A beschreibt ein Brennstoffzellensystem mit Kathoden- und Anodenrezirkulation. Die Rezirkulationsgebläse werden durch Turbinen angetrieben, die jeweils mit dem unter Druck stehenden Reaktionsgas der Anoden- bzw. Kathodenseite beaufschlagt werden. Das Anoden-Rezirkulationsgebläse wird also durch die Expansion des zugeführten Brennstoffs ange trieben. Da der gesamte zugeführte Brennstoff über die Antriebsturbine geführt wird, ist der Antriebsstrom von der Last abhängig.

Aus der gattungsgemäßen EP-A-1 603 180 ist schließlich ein Verfahren und eine Vorrichtung zum Betrieben eines Brennstoffzellensystems mit einem Rezirkulationsgebläse für den Anodenkreislauf bekannt, das von einer luftgetriebenen Turbine angetrieben wird, durch die Kathodenabgas strömt.

Der Erfindung liegt daher die Aufgabe zugrunde, ein Verfahren und eine Vorrichtung zum Betreiben eines Brennstoffzellensystems mit verbesserter Betriebsweise über alle Lastbereiche anzugeben.

Hinsichtlich des Verfahrens wird die Aufgabe erfindungsgemäß durch die im Anspruch 1 angegebenen Merkmale gelöst. Hinsichtlich der Vorrichtung wird die Aufgabe erfindungsgemäß durch die im Anspruch 6 angegebenen Merkmale gelöst.

Vorteilhafte Weiterbildungen der Erfindung sind Gegenstand der Unteransprüche.

Beim erfindungsgemäßen verfahren zum Betreiben eines Brennstoffzellensystems mit einem in einen Brennstoffkreislauf des Brennstoffzellensystems angeordneten Rezirkulationsgebläse, mittels dessen dem Brennstoffzellensystem anodenseitig austretenden Anodenabgas wieder zugeführt wird, wird das Rezirkulationsgebläse von einer luftbetriebenen Antriebsturbine angetrieben, die mit verdichteter Luft beaufschlagt wird. Hierzu wird bevorzugt strömungseingangsseitig des Brennstoffzellensystems, d.h. vor dem Kathodeneingang, verdichtete Luft abgezweigt. Hierdurch kann das Rezirkulationsgebläse über alle Lastbereiche, d.h. sowohl bei niedrigen als auch bei hohen Lasten, optimal angetrieben werden. Insbesondere wird hierdurch im Teillastbereich einer Luftversorgungseinheit, z. B. eines Luftverdichters des Brennstoffzellensystems, überschüssig geförderte Luft energetisch genutzt. Somit ist der Wirkungsgrad des Brennstoffzellensystems verbessert.

Bevorzugt werden die Antriebsturbine und das Rezirkulationsgebläse mittels magnetischer Kraftübertragung gekoppelt. Eine magnetische Kraftübertragung bewirkt, dass im Rezirkulationsgebläse keine Verbindung zwischen Antriebswelle der Antriebsturbine und Gebläsegehäuse besteht, so dass das Rezirkulationsgebläse vollständig gehäusedicht aufgebaut ist. Hierdurch ist eine Vermischung der Luft als Antriebsmedium für die Antriebsturbine und des Anodenabgases, insbesondere Wasserstoff enthaltenes Gas, als Fördermedium des Rezirkulationsgebläses sicher vermieden.

In einer möglichen Ausführungsform wird die verdichtete Luft zwischen der Luftversorgungseinheit und einem dieser nachgeschalteten Wärmetauscher, insbesondere dem Ladeluftkühler entnommen. Somit wird der Antriebsturbine die unmittelbar aus der Luftversorgungseinheit austretende ungekühlte verdichtete Luft zugeführt, so dass die Antriebsturbine und das Brennstoffzellensystem mit einem hinreichend guten Wirkungsgrad in allen Lastbereichen betrieben werden kann.

Zusätzlich kann die Antriebsturbine mit kathodenseitig austretendem Kathodenabgas des Brennstoffzellensystems beaufschlagt werden. Hierzu ist vor der Antriebsturbine ein Steuerelement, insbesondere ein Drei-Wege-Ventil in eine Zuführungsleitung für die Antriebsturbine angeordnet. Je nach Art der Abzweigung des Kathodenabgases kann dieses vor Beaufschlagung der Antriebsturbine noch gekühlt werden.

Hinsichtlich der Vorrichtung zum Betreiben des Brennstoffzellensystems mit dem Rezirkulationsgebläses, das kraftschlüssig mit einer luftbetriebenen Antriebsturbine koppelbar ist, ist erfindungsgemäß die luftbetriebene Turbine mit verdichteter Luft beaufschlagbar, die strömungseingangsseitig der Brennstoffzelle abzweigbar ist. Bevorzugt sind die Antriebsturbine und das Rezirkulationsgebläse mittels magnetischer Kraftübertragung koppelbar. Hierdurch sind aufwändige Wellendichtung zur Vermeidung einer Vermischung von Luft als Oxidationsmittel und Wasserstoff als Brennstoff sicher verhindert.

Die der Antriebsturbine zugeführte verdichtete Luft wird dabei von einer Luftversorgungseinheit des Brennstoffzellensystems gefördert. Die Luftversorgungseinheit ist insbesondere ein Luftverdichter, der als ein Turboverdichter ausgebildet ist.

Vorzugsweise ist die verdichtete Luft zwischen der Luftversorgungseinheit und einem dieser nachgeschalteten Ladeluftkühler entnehmbar. Je nach Ausführung kann es sich dabei um einen herkömmlichen luftgekühlten oder kühlmittelgekühlten Ladeluftkühler handeln.

Für eine variable Versorgung der Antriebsturbine mit Luft ist der Antriebsturbine zusätzlich zur verdichteten Luft kathodenseitig austretendes Kathodenabgas des Brennstoffzellensystems zuführbar. Darüber hinaus kann das Kathodenabgas vor Zuführung mittels eines Wärmeübertragers gekühlt werden. Dabei wird als Wärmeübertrager ein Luft-Luft-Wärmeübertrager, insbesondere der Befeuchter für die der Kathode zuzuführenden, verdichteten Luft verwendet.

Ausführungsbeispiele der Erfindung werden anhand einer Zeichnung näher erläutert.

Dabei zeigt:

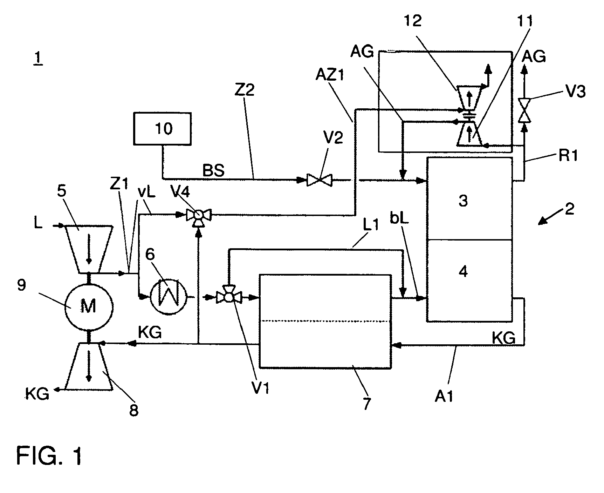

- Fig. 1: schematisch eine Vorrichtung zum Betreiben eines Brennstoffzellensystems mit einem indirekt luftan- getriebenen Rezirkulationsgebläse.

Die einzige Figur 1 zeigt eine Vorrichtung zum Betreiben eines Brennstoffzellensystems 1 mit einer Brennstoffzelle 2. Alternativ kann das Brennstoffzellensystem 1 in nicht näher dargestellter Art und Weise ein Brennstoffzellenpaket oder einen Brennstoffzellenstapel umfassen. Die Brennstoffzelle 2 besteht aus einer Anode 3 und einer Kathode 4.

Der Brennstoffzelle 2 sind kathodenseitig zur Versorgung mit Oxidationsmittel in eine Kathodenzuleitung Z1 eine Luftversorgungseinheit 5, insbesondere ein Luftverdichter, ein Ladeluftkühler 6 und ein Befeuchter 7 vorgeschaltet. Dabei kann der Befeuchter 7 über eine Umgehungsleitung L1 (= Bypass) umgangen werden. Hierzu ist in der Kathodenzuleitung Z1 ein erstes Steuerelement V1, insbesondere ein Steuerventil, angeordnet. Kathodenabgasseitig ist der Kathode 4 über eine Abgasleitung A1 der Befeuchter 7 und eine Abgasturbine 8 nachgeschaltet. Die Luftversorgungseinheit 5 und die Abgasturbine 8 sind motorgetrieben. Hierzu ist ein Antriebsmotor 9 zum Antrieb sowohl der Luftversorgungseinheit 5 als auch der Abgasturbine 8 vorgesehen. Anodenseitig ist der Brennstoffzelle 2 zur Versorgung mit Brennstoff BS, insbesondere Wasserstoff ein Speicher 10 vorgeschaltet, von dem eine Anodenzuleitung Z2 in die Anode 3 mündet. Über ein Dosierventil V2 ist die Brennstoffzufuhr steuerbar. Anodenabgasseitig ist in eine Rückführleitung R1 ein Rezirkulationsgebläse 11 angeordnet, wobei die Rückführleitung R1 in die Anodenzuleitung Z2 mündet. In der Rückführung R1 ist darüber hinaus ein Abblasventil V3 zum Abblasen von Anodenabgas AG angeordnet. Gemäß der vorliegenden Erfindung wird das Rezirkulationsgebläse 11 von einer luftgetriebenen Antriebsturbine 12 angetrieben. Zur Beaufschlagung der Antriebsturbine 12 mit Luft mündet in diese eine Abzweigleitung AZ1, die zumindest von der Kathodenzuleitung Z1 mit verdichteter Luft vL gespeist wird. Zusätzlich kann die Abzweigleitung AZ1 von der Abgasleitung A1 der Kathode mit Kathodenabgas KG, insbesondere feuchter Luft gespeist werden. Hierzu ist in die Abzweigleitung AZ1 ein zweites Steuerelement V4, insbesondere ein Steuerventil, wie z. B. ein Drei-Wege-Ventil, angeordnet.

Im Betrieb der Vorrichtung wird der Kathode 4 als Oxidationsmittel Luft L, insbesondere Frischluft oder ein anderes sauerstoffhaltiges Medium zugeführt. Dabei wird die Luft L von der Luftversorgungseinheit 5 gefördert und verdichtet. Die verdichtete Luft vL wird anschließend in dem Ladeluftkühler 6 gekühlt und im Befeuchter 7 befeuchtet, indem sie Wasserdampf aus dem kathodenseitig ausströmenden und den Befeuchter 7 ebenfalls durchströmenden Kathodenabgas KG aufnimmt. Die befeuchtete Luft bL strömt durch die Kathode 4 zur Durchführung der elektrochemischen Reaktion - der katalytischen Reformierung - und verlässt diese als Kathodenabgas KG, Wasser oder Wasserdampf, das bzw. der zur Befeuchtung der einströmenden verdichteten Luft vL dem Befeuchter 7 zugeführt wird und von diesem über die Abgasturbine 8 abgeführt wird.

Parallel dazu wird der Anode 3 vom Speicher 10 als Brennstoff BS beispielsweise Wasserstoff oder ein Wasserstoff enthaltenes Medium zugeführt, das anodenabgasseitig als Anodenabgas AG in die Rückführung R1 strömt und über das Rezirkulationsgebläse 11 in die Anodenzuleitung Z2 eingeströmt wird.

Zur Kostenreduzierung durch Wegfall von üblicherweise verwendeter Leistungselektronik und verwendetem Antriebsmotor für das Rezirkulationsgebläse 11 bzw. zur energetischen Nutzbarmachung der mittels der Luftversorgungseinheit 5 überschüssig geförderten Luft L, welche herkömmlich über ein Abblasventil abgelassen wird, wird die Antriebsturbine 12 für das Rezirkulationsgebläse 11 mit verdichteter Luft vL der Luftversorgungseinheit 5 beaufschlagt. Somit kann die im Teillastbereich überschüssig geförderte und verdichtete Luft vL genutzt werden. Darüber hinaus kann das aus dem Stand der Technik bekannte Abblasventil entfallen. Um auch bei hoher Last eine Rückführung von Anodenabgas AG zu ermöglichen, wird die Antriebsturbine 12 mit insbesondere gekühltem Kathodenabgas KG beaufschlagt. Dazu wird das Kathodenabgas KG nach dem Befeuchter 7 abgezweigt und dem zweiten Steuerelement V4 zugeführt.

Um eine Vermischung des die Antriebsturbine 12 antreibenden Mediums - verdichtete Luft vL und/oder Kathodenabgas KG - und des vom Rezirkulationsgebläse 11 geförderten Mediums - Wasserstoff oder wasserstoffhaltiges Medium - zu vermeiden, sind die Antriebsturbine 12 und das Rezirkulationsgebläse 11 mittels magnetischer Kraftübertragung gekoppelt. Dabei überträgt in nicht näher dargestellter Art und Weise ein auf einer Antriebswelle der Antriebsturbine 12 angeordneter Antriebsmagnet die Kraft auf einen Laufradmagneten des Rezirkulationsgebläses 11. Das nicht dargestellte Laufrad des Rezirkulationsgebläses 11 dreht sich dadurch im nicht dargestellten Gebläsegehäuse um seine eigene Laufradwelle. Dabei besteht keine Verbindung zwischen der Antriebswelle der Antriebsturbine 12 und dem Gebläsegehäuse, so dass kein Medienübertritt stattfindet.

### Bezugszeichenliste

- 1: Brennstoffzellensystem
- 2: Brennstoffzelle
- 3: Anode
- 4: Kathode
- 5: Luftversorgungseinheit
- 6: Ladeluftkühler
- 7: Befeuchter
- 8: Abgasturbine
- 9: Antriebsmotor
- 10: Speicher
- 11: Rezirkulationsgebläse
- 12: Antriebsturbine

- AG: Anodenabgas
- AZ1: Abzweigleitung
- A1: Abgasleitung
- bL: befeuchtete Luft
- BS: Brennstoff
- KG: Kathodenabgas
- L: Luft
- vL: verdichtete Luft
- V1: erstes Steuerelement
- V2: Dosierventil
- V3: Abblasventil
- V4: zweites Steuerelement
- Z1: Kathodenzuleitung
- Z2: Anodenzuleitung

## Patentansprüche

1. Verfahren zum Betreiben eines Brennstoffzellensystems (1) mit einem in einem Brennstoffkreislauf des Brennstoffzellensystems (1) angeordneten Rezirkulationsgebläse (11), anhand dessen dem Brennstoffzellensystem (1) anodenseitig austretender Brennstoff (BS) wieder zugeführt wird und das von einer luftbetriebenen Antriebsturbine (12) angetrieben wird, wobei die luftbetriebene Antriebsturbine (12) mit verdichteter Luft (vL) beaufschlagt wird, **dadurch gekennzeichnet,**
**dass** die Antriebsturbine (12) mit verdichteter Luft (vL) einer Luftversorgungseinheit (5) des Brennstoffzellensystems (1) beaufschlagt wird.

2. Verfahren nach Anspruch 1,
**dadurch gekennzeichnet,**
**dass** die verdichtete Luft (vL) zwischen der Luftversorgungseinheit (5) und einem dieser nachgeschalteten Ladeluftkühler (6) entnommen wird.

3. Verfahren nach Anspruch 1 oder 2,
**dadurch gekennzeichnet,**
**dass** die Antriebsturbine (12) zusätzlich mit kathodenseitig austretendem Kathodenabgas (KG) des Brennstoffzellensystems (1) beaufschlagt wird.

4. verfahren nach Anspruch 3,
**dadurch gekennzeichnet,**
**dass** das Kathodenabgas (KG) vor Beaufschlagung der Antriebsturbine (12) gekühlt wird.

5. Verfahren nach einem der Ansprüche 1 bis 4,
**dadurch gekennzeichnet,**
**dass** die Antriebsturbine (12) und das Rezirkulationsgebläse (11) mittels magnetischer Kraftübertragung gekoppelt werden.

6. Vorrichtung zum Betreiben eines Brennztoffzellensystems (1) mit einem in einem Brennstoffkreislauf des Brennstoffzellensystems (1) angeordneten Rezirkulationsgebläse (11), das dem Brennstoffzellensystem (1) anodenseitig austretenden Brennstoff (BS) wieder zuführt und das kraftschlüssig mit einer luftbetriebenen Antriebsturbine (12) koppelbar ist, wobei die luftbetriebene Antriebsturbine (12) mit verdichteter Luft (V1) beaufschlagbar ist,
**dadurch gekennzeichnet,**
**dass** der Antriebsturbine (12) verdichtete Luft (vL) einer Luftversorgungseinheit (5) des Brennstoffzellensystems (1) zuführbar ist.

7. Vorrichtung nach Anspruch 6,
**dadurch gekennzeichnet,**
**dass** die verdichtete Luft (vL) zwischen der Luftversorgungseinheit (5) und einem dieser nachgeschalteten Ladeluftkühler (6) entnehmbar ist.

8. Vorrichtung nach Anspruch 6 oder 7,
**dadurch gekennzeichnet,**
**dass** der Antriebsturbine (12) zusätzlich kathodenseitig austretendes Kathodenabgas (KG) des Brennstoffzellensystems (1) zuführbar ist.

9. Vorrichtung nach Anspruch 8,
**dadurch gekennzeichnet,**
**dass** die Antriebsturbine (12) mit gekühltem Kathodenabgas (KG) beaufschlagbar ist.

10. Vorrichtung nach einem der Ansprüche 6 bis 9,
**dadurch gekennzeichnet,**
**dass** die Antriebsturbine (12) und das Rezirkulationsgebläse (11) mittels magnetischer Kraftübertragung koppelbar sind.

## Claims

1. Method for the operation of a fuel cell system (1) comprising a recirculation fan (11) located in a fuel circuit of the fuel cell system (1), by means of which fuel (BS) discharged from the anode side is returned to the fuel cell system (1) and which is driven by an air-operated drive turbine (12), wherein compressed air (vL) is applied to the air-operated drive turbine (12),
**characterised in that**
compressed air (vL) of an air supply unit (5) of the fuel cell system (1) is applied to the drive turbine (12).

2. Method according to claim 1,
**characterised in that**
the compressed air (vL) is drawn off between the air supply unit (5) and an intercooler (6) sited downstream thereof.

3. Method according to claim 1 or 2,
**characterised in that**
cathode exhaust gas (KG) of the fuel cell system (1) discharged from the cathode side is additionally applied to the drive turbine (12).

4. Method according to claim 3,
**characterised in that**
the cathode exhaust gas (KG) is cooled before being applied to the drive turbine (12).

5. Method according to any of claims 1 to 4,
**characterised in that**
the drive turbine (12) and the recirculation fan (11) are coupled by means of magnetic power transmission.

6. Device for the operation of a fuel cell system (1) comprising a recirculation fan (11) located in a fuel circuit of the fuel cell system (1), which returns fuel (BS) discharged from the anode side to the fuel cell system (1) and which can be coupled non-positively to an air-operated drive turbine (12), wherein compressed air (VI) can be applied to the an air-operated drive turbine (12),
**characterised in that**
compressed air (vL) of an air supply unit (5) of the fuel cell system (1) can be applied to the drive turbine (12).

7. Device according to claim 6,
**characterised in that**
the compressed air (vL) can be drawn off between the air supply unit (5) and an intercooler (6) sited downstream thereof.

8. Device according to claim 6 or 7,
**characterised in that**
cathode exhaust gas (KG) of the fuel cell system (1) discharged from the cathode side can additionally be applied to the drive turbine (12).

9. Device according to claim 8,
**characterised in that**
cooled cathode exhaust gas (KG) can be applied to the drive turbine (12).

10. Device according to any of claims 6 to 9,
**characterised in that**
the drive turbine (12) and the recirculation fan (11) can be coupled by means of magnetic power transmission.

## Revendications

1. Procédé permettant de faire fonctionner un système de pile à combustible (1) présentant une soufflante de recirculation (11) montée dans un circuit de combustible dudit système de pile à combustible (1), au moyen de laquelle le combustible (BS) à sa sortie côté anode est réintroduit dans le système à pile à combustible (1), ladite soufflante étant entraînée par une turbine de commande (12) actionnée par l'air, la turbine de commande (12) actionnée par l'air étant soumise à l'action de l'air comprimé (vL), **caractérisé en ce que** la turbine de commande (12) est soumise à l'action de l'air comprimé (vL) d'une unité d'alimentation en air (5) du système de pile à combustible (1).

2. Procédé selon la revendication 1, **caractérisé en ce que** l'air comprimé (vL) est prélevé entre l'unité d'alimentation en air (5) et l'un de ces refroidisseurs d'air de suralimentation (6) qui est placé en aval.

3. Procédé selon la revendication 1 ou 2, **caractérisé en ce que** la turbine de commande (12) est alimentée en gaz de combustion de cathode (KG) à sa sortie côté cathode du système de pile à combustible (1).

4. Procédé selon la revendication 3, **caractérisé en ce que** le gaz de combustion de cathode (KG) est refroidi avant l'alimentation de la turbine de commande (12).

5. Procédé selon l'une quelconque des revendications 1 à 4, **caractérisé en ce que** la turbine de commande (12) et la soufflante de recirculation (11) sont couplées au moyen d'une transmission de force magnétique.

6. Dispositif permettant de faire fonctionner un système de pile à combustible (1) présentant une soufflante de recirculation (11) montée dans un circuit de combustible du système de pile à combustible (1), laquelle soufflante réintroduit le combustible (BS) à sa sortie côté anode dans le système à pile à combustible (1) et qui peut être couplée à une turbine de commande (12) actionnée par l'air, la turbine de commande (12) actionnée par l'air pouvant être soumise à l'action de l'air comprimé (vl), **caractérisé en ce que** l'air comprimé (vL) d'une unité d'alimentation en air (5) du système de pile à combustible (1) peut être amené dans la turbine de commande (12) .

7. Dispositif selon la revendication 6, **caractérisé en ce que** l'air comprimé (vL) est prélevé entre l'unité d'alimentation en air (5) et l'un de ces refroidisseurs d'air de suralimentation (6) qui est placé en aval.

8. Dispositif selon la revendication 6 ou 7, **caractérisé en ce que** le gaz de combustion de cathode (KG) du système de pile à combustible (1) à sa sortie côté cathode peut être en outre amené à la turbine de commande (12).

9. Dispositif selon la revendication 8, **caractérisé en ce que** la turbine de commande (12) peut être alimentée en gaz de combustion (KG) de cathode refroidi.

10. Procédé selon l'une quelconque des revendications 6 à 9, **caractérisé en ce que** la turbine de commande (12) et la soufflante de recirculation (11) peuvent être couplées au moyen d'une transmission de force magnétique.
